# EUROPÄISCHE PATENTANMELDUNG

(11) **EP 4 696 463 A1**
(43) Veröffentlichungstag der Anmeldung: **18.02.2026**
(21) Anmeldenummer: 24194786.0
(22) Anmeldetag: 15.08.2024
(51) Int. Cl.: B25H 1/02, B25H 1/10

(54) **ABLAGEEINRICHTUNG FÜR EINE BEFESTIGUNGSVORRICHTUNG ZUM FESTLEGEN EINES ABLAGEKÖRPERS**

(71) Anmelder: Schwäbische Werkzeugmaschinen GmbH, 78713 Schramberg-Waldmössingen (DE)
(72) Erfinder: Fontaine, Thomas, 78078 Niedereschach (DE); Marmol, Damian, 33-395 Chelmiec (PL); Gao, Jianjun, Suzhou, 215126 (CN)
(74) Vertreter: Schorr, Peter Karl

(57) **Zusammenfassung**

Die Erfindung betrifft eine Ablageeinrichtung (2) für eine Befestigungsvorrichtung (4) zum Festlegen eines Ablagekörpers, mit mindestens einem tisch- oder plattenartigen Ablagemittel (6), das eine Ablagefläche (8) umfasst, an der ein Ablagekörper und/oder eine den Ablagekörper an dem Ablagemittel (6) lösbar festlegende Befestigungseinheit (10) berührend anordenbar ist, und das eine Mehrzahl von Aussparungen (12) umfasst, die quer zur Ablagefläche (8) erstreckt sind und die von der Ablagefläche (8) aus zugänglich sind, und mit mindestens einem Haltebolzen (14), wobei jeweils einer des mindestens einen Haltebolzens (14) in einer der mindestens einen Aussparung (12) entlang einer quer zur Ablagefläche (8) verlaufenden Überführungsrichtung (16) bewegbar angeordnet ist, der in einer Grundstellung festlegbar ist, in welcher der Haltebolzen (14) die Ablagefläche (8) des Ablagemittels (6) mit einer von außen zugänglichen Stirnfläche (18) eines Kopfabschnitts (20) des Haltebolzen (14) stufenlos fortsetzt oder bezüglich der Ablagefläche (8) in Richtung Aussparung (12) zurückspringt, und der in eine Haltestellung überführbar und festlegbar ist, in welcher der Kopfabschnitt (20) des Haltebolzen (14) bezüglich der Ablagefläche (8) vorspringend aus der Aussparung (12) hervorragt und in der ein Koppelbereich (22) des Kopfabschnitts (20) zum daran Festlegen einer der mindestens einen Befestigungseinheit (10) von außen zugänglich ist.

## Beschreibung

Die Erfindung betrifft eine Ablageeinrichtung für eine Befestigungsvorrichtung zum Festlegen eines Ablagekörpers.

Ablageeinrichtungen zum Ablegen und Festlegen von Ablagekörpern sind aus dem Stand der Technik in unterschiedlichen Variationen bekannt. Bei diesen umfasst die Ablageeinrichtung ein tisch- oder plattenartiges Ablagemittel, auf dem ein Ablagekörper ablegbar ist. Zum lösbaren Festlegen des am Ablagemittel abgelegten Ablagekörpers umfassen bekannte Ablageeinrichtungen Befestigungseinheiten, die am Ablagemittel ortsfest festlegbar sind. Die Befestigungseinheiten können dann ihrerseits den Ablagekörper gegenüber des Ablagemittels form- oder kraftschlüssig klemmend festlegen.

Bei den bekannten Ablageeinrichtungen hat es sich als nachteilig herausgestellt, dass zum Festlegen der Befestigungseinheiten diese umständlich am Ablagemittel verschraubt werden müssen. Ferner ist ein Platzieren der Befestigungseinheiten am Ablagemittel nur an Stellen des Ablagemittels möglich, an denen hierzu Möglichkeiten gegeben sind.

Aufgabe eines Ausführungsbeispiels der Erfindung ist, eine Ablageeinrichtung für eine Befestigungsvorrichtung zum Festlegen eines Ablagekörpers vorzuschlagen, durch die eine Befestigungseinheit einfach am Ablagemittel festlegbar ist.

Diese Aufgabe wird gelöst durch eine Ablageeinrichtung für eine Befestigungsvorrichtung zum Festlegen eines Ablagekörpers, mit mindestens einem tisch- oder plattenartigen Ablagemittel, das eine Ablagefläche umfasst, an der ein Ablagekörper und/oder eine den Ablagekörper an dem Ablagemittel lösbar festlegende Befestigungseinheit berührend anordenbar ist, und das eine Mehrzahl von Aussparungen umfasst, die quer zur Ablagefläche erstreckt sind und die von der Ablagefläche aus zugänglich sind, und mit mindestens einem Haltebolzen, wobei jeweils einer des mindestens einen Haltebolzens in einer der mindestens einen Aussparung entlang einer quer zur Ablagefläche verlaufenden Überführungsrichtung bewegbar angeordnet ist, der in einer Grundstellung festlegbar ist, in welcher der Haltebolzen die Ablagefläche des Ablagemittels mit einer von außen zugänglichen Stirnfläche eines Kopfabschnitts des Haltebolzen stufenlos fortsetzt oder bezüglich der Ablagefläche in Richtung Aussparung zurückspringt, und der in eine Haltestellung überführbar und festlegbar ist, in welcher der Kopfabschnitt des Haltebolzen bezüglich der Ablagefläche vorspringend aus der Aussparung hervorragt und in der ein Koppelbereich des Kopfabschnitts zum daran Festlegen einer der mindestens einen Befestigungseinheit von außen zugänglich ist.

Dadurch, dass die Ablageeinrichtung eine Mehrzahl von Aussparungen im Ablagemittel umfasst, wobei in den Aussparungen jeweils mindestens ein Haltebolzen anordenbar ist, der von der Grundstellung in die Haltestellung überführbar ist, kann der Befestigungseinheit auf einfache Weise eine Koppelmöglichkeit zur Verfügung gestellt werden, um die Befestigungseinheit ortsfest am Ablagemittel festzulegen. Hierdurch kann insbesondere auf das Vorsehen eines umständlichen Verschraubens verzichtet werden.

Dadurch, dass die Haltebolzen in der Grundstellung derart im Ablagemittel bevorratet sind, dass diese nicht über die Ablagefläche hinausragen, können zum Festlegen der Befestigungseinheit nur an den Stellen Haltebolzen in die Haltestellung überführt werden, an denen eine Befestigungseinheit angeordnet werden soll. In den verbleibenden Bereichen ist eine ungehinderte Ablage von Ablagekörpern möglich.

Ferner kann durch die Vielzahl von Aussparungen und darin angeordneten Haltebolzen auf einfache Art und Weise Ablagekörper unterschiedlicher Geometrie an dem tisch- oder plattenartigen Ablagemittel angeordnet und festgelegt werden.

Der Ablagekörper kann beispielsweise eine Baugruppe, ein Bauteil oder ein Werkstück umfassen.

Das tisch- oder plattenartige Ablabgemittel kann derart ausgebildet sein, dass dieses beispielsweise an einer Werkzeugmaschine lösbar oder unlösbar festgelegt ist, oder dass dieses zum sicheren Transport des Ablagekörpers manuell durch eine Bedienperson oder durch einen Roboter greifbar und transportierbar ist.

Die Anordnung der Mehrzahl von Aussparungen kann grundsätzlich beliebig sein. Es erweist sich als vorteilhaft, wenn die Mehrzahl von Aussparungen im tisch- oder plattenartige Ablagemittel quer zur Überführungsrichtung gleichmäßig zueinander beanstandet sind und gitternetzartig verteilt sind.

Dadurch, dass die Aussparungen im Ablagemittel gleichmäßig zueinander beabstandet sind und insbesondere gitternetzartig verteilt sind, ist eine gleichmäßige, homogene Verteilung der Aussparungen über die Ablagefläche des Haltemittels betrachtet ermöglicht. Durch das Anordnen der Haltebolzen in den Aussparungen ist hierdurch ein variationenreiches Festlegen von Befestigungseinheiten an dem Ablagemittel ermöglicht.

Zwei Aussparungen können einen relativ beliebigen Abstand zueinander aufweisen, sofern die technische Funktion erfüllt ist, dass Befestigungseinheiten zum Festlegen einer Vielzahl von Ablagekörpern anordenbar ist.

Bei Ausführungsformen der Ablageeinrichtung ist es bevorzugt, wenn zwei Aussparungen einen Abstand von maximal 50 mm zueinander, insbesondere maximal 40 mm zueinander, insbesondere maximal 35 mm zueinander, insbesondere maximal mindestens 30 mm zueinander, aufweisen. Hierdurch ist eine engmaschige Anordnungsmöglichkeit von Haltebolzen und hierdurch von Befestigungseinheiten gegeben.

Um zu gewährleisten, dass mindestens einer des mindestens einen Haltebolzens der in mindestens einer der Mehrzahl von Aussparungen angeordnet ist, in der jeweiligen Aussparung verliersicher angeordnet ist, erweist es sich als vorteilhaft, wenn die Ablageeinrichtung mindestens eine Anschlageinheit umfasst, die gemeinsam mit einem Haltebolzen in einer der Aussparungen angeordnet ist und durch die zumindest ein Bewegen des Haltebolzens entlang der Überführungsrichtung in und entgegen der Überführungsrichtung begrenzbar ist.

Bei einer Weiterbildung letztgenannter Ausführungsform erweist es sich als vorteilhaft, wenn die Anschlageinheit einen in der Aussparung angeordneten Ringkörper umfasst und/oder wenn ein Bewegen des Haltebolzens aus Richtung Ablagefläche in die Aussparung durch Anschlag des Kopfabschnitts am Ringkörper auf der der Ablagefläche zugewandten Seite des Ringkörpers begrenzt ist, wenn der Haltebolzen einen an den Kopfabschnitt angrenzenden Gleitabschnitt umfasst, der eine bezüglich des Kopfabschnitts zurückspringende Außenfläche des Haltebolzens aufweist und dessen Durchmesser quer zur Überführungsrichtung zum Innendurchmesser des Ringkörpers korrespondierend, insbesondere komplementär, ausgebildet ist, und wenn der Haltebolzen einen Fußabschnitt umfasst, der an dem dem Kopfabschnitt abgewandten Ende des Gleitabschnitts lösbar festlegbar oder festgelegt ist, dessen Durchmesser quer zur Überführungsrichtung größer ist als der Innendurchmesser des Ringkörpers und der in der Haltestellung auf der dem Kopfabschnitt abgewandten Seite des Ringkörpers am Ringkörper anliegt.

Wenn die Anschlageinheit einen in der Aussparung angeordneten Ringkörper umfasst, kann jede der Mehrzahl von Aussparungen durch das Anordnen eines Ringkörpers mit einer Anschlageinheit ausgestattet werden. Hierdurch kann das Ablagemittel technisch einfach realisiert werden, indem die Aussparungen beispielsweise durch, insbesondere durchgehende, Bohrungen in das Ablagemittel eingebracht werden.

Wenn der Haltebolzen einen Kopfabschnitt und einen Fußabschnitt umfasst, kann der Haltebolzen bis zum Anschlagen des Kopfabschnitts beziehungsweise des Fußabschnitts innerhalb der Aussparung bewegt werden.

Dadurch, dass der Fußabschnitt lösbar am Haltebolzen festlegbar ist, ist die Ablageeinrichtung vereinfacht montierbar. Solchenfalls kann der Haltebolzen allein oder zusammen mit dem Ringkörper in der Aussparung angeordnet werden oder, wenn der Ringkörper bereits in der Aussparung angeordnet ist, beim Anordnen des Haltebolzens durch den Ringkörper hindurchgesteckt werden und der Fußabschnitt auf der der Ablagefläche abgewandten Seite des Ablagemittels in die Aussparung eingeführt und am Haltebolzen festgelegt werden.

Der Fußabschnitt umfasst solchenfalls ein vom Haltebolzen separates oder separierbares Bauteil.

Um ein Bewegen des Haltebolzens entlang der Überführungsrichtung, also in Überführungsrichtung oder entgegen der Überführungsrichtung, zu führen, umfasst eine Ausführungsform der Ablageeinrichtung mindestens eine Kulissenführung, die eine durch mindestens eine Nut gebildete Kulisse am Haltebolzen, insbesondere am Gleitabschnitt des Haltebolzens, umfasst und die mindestens einen pinartigen Vorsprung umfasst, der ortsfest in der Aussparung festgelegt ist und der in die Kulisse eingreift, insbesondere wobei der pinartige Vorsprung am Ringköper, insbesondere auf der dem Gleitabschnitt des Haltebolzens zugewandten Seite, ortsfest festgelegt ist.

Durch die Kulissenführung ist ein Bewegen des Haltebolzens führbar.

Durch die Kulissenführung sind unterschiedliche Positionen des Haltebolzens anfahr- sowie einstellbar und der Haltebolzen alternativ oder in Kombination mit der Anschlageinheit an diesen Positionen anordenbar und festlegbar.

Bei einer Ausführungsform der Ablageeinrichtung ist die durch mindestens eine Nut gebildete Kulisse am Gleitabschnitt des Haltebolzens angeordnet. Solchenfalls kann es sich als vorteilhaft erweisen, wenn der pinartige Vorsprung am Ringkörper, insbesondere auf der dem Gleitabschnitt des Haltebolzens zugewandten Seite des Ringkörpers, ortsfest festgelegt ist.

Bei einer Weiterbildung letztgenannter Ausführungsform ist vorgesehen, dass die Kulissenführung Element der Anschlageinheit ist, wobei der pinartige Vorsprung in der Grundstellung an einem Grundstellungsanschlag der Kulisse angeordnet und der Haltebolzen gegen ein Bewegen in Richtung aus der Aussparung gehalten ist, wobei der Haltebolzen zum Lösen des pinartigen Vorsprungs aus dem Grundstellungsanschlag in Richtung in die Aussparung bewegbar und in einen Lösebereich der Kulisse führbar ist, wobei der Haltebolzen zum Anordnen des pinartigen Vorsprungs in einem Haltestellungsbereich der Kulisse in Richtung aus der Aussparung bewegbar ist und wobei der Haltebolzen zum Anordnen des pinartigen Vorsprung am Grundstellungsanschlag in Richtung in die Aussparung bis Erreichen eines Grundstellungsvoranschlags bewegbar und vom Grundstellungsvoranschlag durch Bewegen in Richtung aus der Aussparung bis Erreichen des Grundstellunganschlags bewegbar ist.

Die nutartige Kulisse kann zum Anfahren der unterschiedlichen Stellungen mehrere Verzweigungen aufweisen, die durch Betätigen des Haltebolzens und hierdurch durch Initiieren einer Relativbewegung zwischen Haltebolzen und pinartigen Vorsprung den Haltebolzen aus einer Stellung zu lösen beziehungsweise an einer Stelle anordnen.

So kann der Haltebolzen aus der Grundstellung durch Bewegen des Haltebolzens in Überführungsrichtung, aus Richtung Ablagefläche in Richtung Ablagemittel, gelöst werden und innerhalb der Kulisse in den Lösebereich geführt werden. In dieser ist der Haltebolzen maximal in die Aussparung eingetaucht. Im Lösebereich selbst kann der Haltebolzen mit dem pinartigen Vorsprung einen Anschlag bilden oder der pinartige Vorsprung anschlagsfrei in der Kulisse angeordnet sein, wobei der Haltebolzen mit seinem Kopfabschnitt am Ringkörper anliegt.

Beim hieran folgenden Bewegen des Haltebolzens entgegen der Überführungsrichtung, also in Richtung von der Ablagefläche, weg von der Aussparung, wird solchen Falls der Haltebolzen derart bewegt, dass sich der pinartige Vorsprung im Haltestellungsbereich der Kulisse befindet. An diesem kann der pinartige Vorsprung mit der Kulisse einen Anschlag bilden und/oder der Haltebolzen mit seinem Fußabschnitt am ringartigen Körper anliegen, wobei der pinartige Vorsprung anschlagsfrei in der Kulisse angeordnet ist.

Beim erneuten Betätigen des Haltebolzens durch Bewegen in Überführungsrichtung, also von der Ablagefläche in Richtung Aussparung, wird hierbei der pinartige Vorsprung nicht wieder zurück in den Lösebereich überführt, sondern über eine Abzweigung in Richtung Grundstellungsvoranschlag. Mit Erreichen des Grundstellungsvoranschlags wird ein Anschlag gebildet, der ein weiteres Bewegen des Haltebolzens weiter in die Aussparung hinein blockiert. Bei einem Herausbewegen des Haltebolzens entgegen der Überführungsrichtung, also aus Richtung Ablagefläche weg von der Aussparung, wird hierdurch der pinartige Vorsprung wieder zurück in den Grundstellungsanschlag geführt und legt den Bolzen hier gegen ein Bewegen entgegen der Überführungsrichtung fest.

Grundsätzlich ist es denkbar, dass die Mehrzahl von Aussparungen Senkbohrungen im Ablagemittel umfassen, also nicht durchgängig sind.

Zum Anordnen und Festlegen des Haltebolzens und des Ringkörpers erweist es sich als vorteilhaft, wenn zumindest eine der Mehrzahl von Aussparungen durch den Plattenkörper durchgehend ausgebildet ist und/oder wenn der Haltebolzen einen parallel zur Überführungsrichtung erstreckten Hohlraum umfasst, der über eine Öffnung am dem Kopfabschnitt gegenüberliegenden Ende des Haltebolzens von außen zugänglich ist.

Um die Gefahr eines Eindringens von Schmutz und Feuchtigkeit bei letztgenannter Ausführungsform zumindest zu reduzieren, umfasst eine Weiterbildung der letztgenannten Ausführungsform eine eine im Wesentlichen geschlossene Oberfläche umfassende Bodenplatte, die quer zur Überführungsrichtung eine geschlossenen Fläche umfasst, die am tisch- oder plattenartigen Ablagemittel auf der der Ablagefläche gegenüberliegende Seite des Ablagemittels lösbar oder unlösbar festlegbar oder festgelegt ist und durch die die zumindest eine der Mehrzahl von Aussparungen auf der der Anlagefläche abgewandten Seite des Plattenkörpers in Gänze oder zumindest abschnittsweise nach außen in verschlossen sind.

Um ein Überführen des Spannbolzens in die einzelnen Stellungen zu erleichtern, umfasst ein Ausführungsbeispiel der Ablageeinrichtung mindestens ein mechanisch, elektrisch, elektromagnetisch, pneumatisch und/oder hydraulisch wirksames Spannmittel, das in einer Aussparung gemeinsam mit einem Haltebolzen anordenbar ist und durch das der Haltebolzen in die Haltestellung spannbar ist.

Durch das Anordnen des Spannmittels muss der Spannbolzen stets entgegen der Federkraft in Richtung Aussparung entlang der Überführungsrichtung bewegt werden.

Bei einer Weiterbildung letztgenannter Ausführungsform erweist es sich als vorteilhaft, wenn das Spannmittel eine Feder umfasst, die mit einem Ende an der Bodenplatte und mit dem anderen Ende am Haltebolzen abgestützt ist, insbesondere mit dem am Haltebolzen abgestützten Ende in der Öffnung des Haltebolzens angeordnet ist.

Durch das Vorsehen des Spannmittels ist der Spannbolzen auf einfache Weise manuell oder durch einen Manipulator, wie Roboter oder dergleichen, in dem Ablagemittel versenkbar und durch Drücken in Richtung der Überführungsrichtung entweder in der Haltestellung oder der Grundstellung anordenbar.

Hierdurch kann auf einfache Weise, nämlich durch Drücken in Richtung der Überführungsrichtung, an den Stellen des Ablagemittels ein Haltebolzen aus der Aussparung durch das Spannmittel herausbewegt werden, an dem eine Befestigungseinheit vorzusehen ist.

Hierdurch ist ein Nutzen der Ablageeinrichtung werkzeuglos ermöglicht.

Um ein vereinfachtes Festlegen der Befestigungseinheit am Haltebolzen zu gewährleisten, erweist es sich als vorteilhaft, wenn der Koppelbereich das Kopfabschnitts des Haltebolzens mindestens einen, insbesondere rotationsymmetrischen, Hintergriffbereich umfasst, der durch einen Rücksprung quer zur Überführungsrichtung in der der parallel oder schräg zur Überführungsrichtung verlaufenden Außenfläche des Kopfbereichs gebildet ist.

Hierdurch kann der Haltebolzen in der Haltestellung durch die Befestigungseinheit formschlüssig gegriffen werden. Hierdurch kann die Befestigungseinheit mit einer erhöhten Kraft an dem Ablagemittel festgelegt werden und selbst mit einer erhöhten Kraft den Ablagekörper am Ablagemittel festlegen.

Grundsätzlich ist es denkbar, dass in jeder der Mehrzahl von Aussparungen ein Haltebolzen angeordnet ist. Allerdings sind auch Bestückungszustände der Ablageeinrichtung denkbar, bei denen mindestens eine der Mehrzahl von Aussparungen haltebolzenfrei ausgebildet ist. Um ein Eindringen von Verschmutzungen und Feuchtigkeit zu verhindern, erweist es sich solchenfalls als vorteilhaft, wenn die Ablageeinrichtung mindestens ein stopfenartiges Verschlusselement aufweist, das in der Aussparung anordenbar ist, das im angeordneten Zustand die Aussparung aus Richtung Ablagefläche nach Außen verschließt und das im angeordneten Zustand die Ablagefläche des Ablagemittels mit einer von außen zugänglichen Verschlussfläche stufenlos fortsetzt oder bezüglich der Ablagefläche in Richtung Aussparung zurückspringt.

Um ein Betätigen des Haltebolzens und/oder des Verschlusselements in der Grundstellung zu erleichtern, erweist es sich als vorteilhaft, wenn das Verschlusselement an der Verschlussfläche und/oder wenn der Kopfabschnitt des Haltbolzens in der Stirnfläche eine Ausnehmung umfasst, die einen bezüglich der Überführungsrichtung verrundeten oder eckigen Querschnitt umfasst und in die ein Werkzeug zum manuellen oder automatischen Betätigen einführbar ist.

Hierdurch ist ein Greifen und Betätigen des Verschlusselements beziehungsweise des Haltebolzens vereinfacht.

Grundsätzlich ist es denkbar, dass der Haltebolzen mit seiner Stirnfläche und/oder das Verschlusselement mit seiner Verschlussfläche die Ablagefläche im Wesentlichen spalt- und/oder stufenlos fortsetzt. Allerdings können auch Ausführungsformen vorgesehen sein, bei denen in der Grundstellung das Verschlusselement mit seiner Verschlussfläche beziehungsweise der Haltebolzen mit seiner Stirnfläche in Richtung Aussparung versetzt angeordnet ist. Solchenfalls kann es sich als vorteilhaft erweisen, wenn die Ablageeinrichtung mindestens ein Stopfenelement umfasst, das in der Ausnehmung in der Stirnfläche des Kopfabschnitt des Haltebolzens und/oder in der Ausnehmung in der Verschlussfläche des Verschlusselements anordenbar ist und das die Stirnfläche bzw. die Verschlussfläche mit einem Endabschnitt stufenlos fortsetzt oder bezüglich der Stirnfläche bzw. der Verschlussfläche in Richtung Ausnehmung zurückspringt und/oder wenn die Ablageeinrichtung mindestens ein Deckelelement umfasst, das in der Ausnehmung in der Stirnfläche des Kopfabschnitts des Haltebolzens und/oder in der Ausnehmung in der Verschlussfläche des Verschlusselements anordenbar ist und das mit einem Bodenabschnitt an der Stirnfläche bzw. an der Verschlussfläche, die Stirnfläche bzw. die Verschlussfläche insbesondere in Gänze oder zumindest abschnittsweise quer zur Überführungsrichtung überdeckend, anliegt.

Durch das Stopfenelement und/oder durch das Deckelelement lässt sich nach außen eine unebene Oberfläche der Stirnfläche des Kopfabschnitts des Haltebolzens beziehungsweise der Verschlussfläche des Verschlusselements abdecken beziehungsweise kaschieren.

Um die Gefahr eines Eindringens von Verschmutzungen und Feuchtigkeit zumindest zu reduzieren, umfasst eine Weiterbildung der Ablageeinrichtung mindestens ein Dichtmittel, das in der Aussparung, insbesondere an einem an die Ablagefläche angrenzenden Bereich, das am Kopfabschnitt des Haltebolzens und/oder das am Verschlusselement angeordnet ist, und durch das ein Spalt zwischen Haltebolzen und Aussparung bzw. zwischen Verschlusselement und Aussparung verschließbar ist und/oder wobei eine Weiterbildung der Ablageeinrichtung mindestens eine Überdruckeinheit umfasst, die mit einer Fluidführung in der mindestens einen Aussparung mündet, und durch die ein der Aussparung über die Fluidführung zuführbares Fluid mit einem Überdruck beaufschlagbar ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Ablageeinrichtung.

In der Zeichnung zeigt:
- Figur 1: eine Schnittansicht durch einen Bereich einer erfindungsgemäßen Ablageeinrichtung für eine Befestigungsvorrichtung;
- Figur 2: eine perspektivische Draufsicht auf ein Ablagemittel der Ablageeinrichtung gemäß Figur 1 ;
- Figur 3: eine perspektivische Unteransicht des Ablagemittels gemäß Figur 2;
- Figur 4: eine Seitenansicht auf einen in einem Ringkörper angeordneten Haltebolzen mit Spannmittel;
- Figur 5: eine Seitenansicht auf den Haltebolzen gemäß Figur 4 in der Grundstellung;
- Figur 6: eine Seitenansicht auf den Haltebolzen gemäß Figur 4 in einer Lösestellung;
- Figur 7: eine Seitenansicht auf den Haltebolzen gemäß Figur 4 in einer Haltestellung;
- Figur 8: eine Schnittansicht durch einen in der Aussparung des Ablagemittels angeordneten Haltebolzens in der Grundstellung;
- Figur 9: eine Schnittansicht durch einen in der Aussparung des Ablagemittels angeordneten Haltebolzens in der Haltestellung.

Die Figuren zeigen unterschiedliche Darstellungen, insbesondere Detaildarstellungen, einer insgesamt mit dem Bezugszeichen 2 versehenen Ablageeinrichtung für eine Befestigungsvorrichtung 4 zum Festlegen eines Ablagekörpers (in den Figuren nicht dargestellt). Die Ablageeinrichtung 2 umfasst ein tisch- oder plattenartiges Ablagemittel 6, das eine Ablagefläche 8 umfasst, an der einen Ablagekörper (in den Figuren nicht dargestellt) und/oder eine den Ablagekörper an dem Ablagemittel 6 lösbar festlegende Befestigungseinheit 10 berührend anordenbar ist.

Die Ablageeinrichtung 2 umfasst im Ablagemittel 6 eine Mehrzahl von Aussparungen 12, die quer zur Ablagefläche 6 erstreckt sind und die von der Ablagefläche 8 aus von außen zugänglich sind.

Darüber hinaus umfasst die Ablageeinrichtung 2 mehrere Haltebolzen 14, wobei jeweils mindestens einer des mindestens einen Haltebolzens 14 in einer der mindestens einen Aussparung 12 entlang einer quer zur Ablagefläche 8 verlaufenden Überführungsrichtung 16 bewegbar angeordnet ist.

Ein Haltebolzen 14 kann in einer Grundstellung festlegbar sein (Figur 8), in welcher der Haltebolzen 14 die Ablagefläche 8 des Ablagemittels 6 mit einer von außen zugänglichen Stirnfläche 18 eines Kopfabschnitts 20 des Haltebolzens 14 stufenlos fortsetzt. Darüber hinaus kann der Haltebolzen 14 auch in der Grundstellung in Richtung Aussparung 12 bezüglich der Ablagefläche 8 zurückspringen.

Der Haltebolzen 14 kann in einer Haltestellung überführt sein (Figur 9), in welcher der Kopfabschnitt 20 des Haltebolzens 14 bezüglich der Ablagefläche 8 vorspringend aus der Aussparung 12 hervorragt und in der ein Koppelbereich 22 des Kopfabschnitts 20 des Haltebolzens 14 zum daran Festlegen einer der mindestens einen Befestigungseinheit 10 von außen zugänglich ist.

Bei dem in den Figuren ersichtlichen Ausführungsbeispiel der Ablageeinrichtung 2 ist der Koppelbereich 22 durch einen Hintergriffbereich gebildet, der durch einen Rücksprung quer zur Überführungsrichtung 16 in der parallel oder schräg zur Überführungsrichtung 16 verlaufenden Außenfläche des Kopfbereichs 20 gebildet ist.

In den Aussparungen 12 ist eine Anschlageinheit 24 angeordnet. Die Anschlageinheit 24 ist solchen Falls immer gemeinsam mit einem Haltebolzen 14 in einer der Aussparungen 12 angeordnet. Die Anschlageinheit 24 kann einen Ringkörper 26 umfassen, der bei dem in den Figuren gezeigten Ausführungsbeispiel ortsfest innerhalb der Aussparung 12 festgelegt ist. Ein Haltebolzen 14 durchgreift den Ringkörper 26 mit einem Gleitabschnitt 28, der an den Kopfabschnitt 20 anschließend am Haltebolzen 14 ausgebildet ist, und einen geringeren Durchmesser umfasst als der Kopfabschnitt 20. Der Gleitabschnitt 28 umfasst insbesondere einen Durchmesser, der korrespondierend, insbesondere komplementär, zum Innendurchmesser des Ringkörpers 26 ausgebildet ist.

Die Bewegung des Haltebolzens 14 ist hierbei innerhalb der Aussparung 12 durch das Anschlagen des Kopfabschnitts 20 des Haltebolzens 14 am Ringkörper 26 begrenzt.

Auf der dem Kopfabschnitt 20 abgewandten Seite des Haltebolzens 14 ist an dem Ende des Gleitabschnitts 28 ein Fußabschnitt 30 festgelegt. Der Fußabschnitt 30 ist lösbar am Haltebolzen 14 festlegbar und begrenzt ein Bewegen des Haltebolzens in Richtung aus der Aussparung 12 raus durch Anschlagen des Fußabschnitts 30 an der Ablagefläche 8 abgewandten Seite des Ringkörpers 26 in der Haltestellung.

Bei dem in den Figuren gezeigten Ausführungsbeispiel umfasst die Anschlageinheit 24 zudem eine Kulissenführung 32, die eine durch mindestens eine Nut gebildete Kulisse 34 am Haltebolzen, insbesondere am Gleitabschnitt 28 des Haltebolzens 14, und durch einen pinartigen Vorsprung 36, der bei dem in den Figuren gezeigten Ausführungsbeispiel ortsfest am Ringkörper 26 festgelegt ist, umfasst ist.

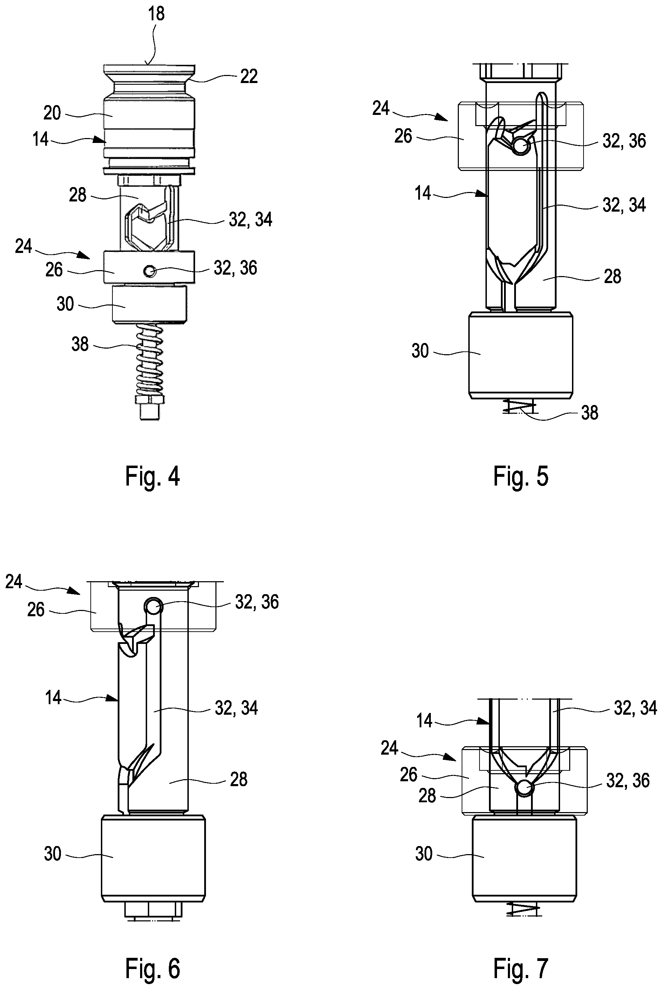

Die Figuren 4 bis 7 zeigen eine Darstellung des Haltebolzens 14 mit Fußabschnitt 30 und mit Kulissenführung 32 sowie Ringkörper 26. Die Figuren 5 bis 7 sind hierbei ausschließlich auf den Gleitabschnitt bezogen, wohingegen Figur 4 noch eine Darstellung des Haltebolzens 14 auch mit dem Kopfabschnitt 20 darstellt.

Aus den Figuren 4 bis 7 ist ersichtlich, dass bei einem Anordnen des Haltebolzens 14 in einer Grundstellung (Figur 5) der pinartige Vorsprung 36 an einem Grundstellungsanschlag der Kulisse 34 angeordnet ist und der Haltebolzen 14 hierdurch gegen ein Bewegen in Richtung aus der Aussparung 12 gehalten ist.

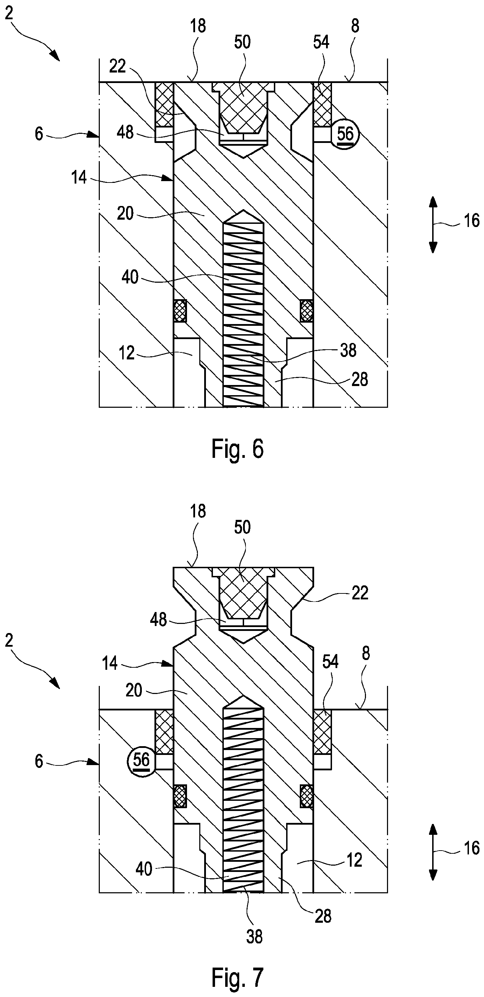

Durch Bewegen des Haltebolzens 14 ist der pinartige Vorsprung 36 innerhalb der Kulisse 34 derart relativ bewegt, dass sich der pinartige Vorsprung 36 in einem Lösebereich der Kulisse 34 befindet (Figur 6).

Durch Bewegen des Haltebolzens 14 parallel zur Überführungsrichtung 16 aus der Aussparung 12 heraus, ist der pinartige Vorsprung 36 in einem Haltestellungsbereich der Kulisse 34 angeordnet. Der Fußabschnitt 30 liegt solchenfalls flächenhaft am Ringkörper 26 an und begrenzt das Bewegen des Haltebolzens 14 weiter aus der Aussparung 12 heraus. Durch erneutes Bewegen der Darstellung gemäß Figur 7 parallel zur Überführungsrichtung 16 in Richtung Aussparung 12 hinein wird dann der pinartige Vorsprung 36 über einen Parallelzweig in der Kulisse 34 wieder am Grundstellungsanschlag gemäß Figur 5 angeordnet.

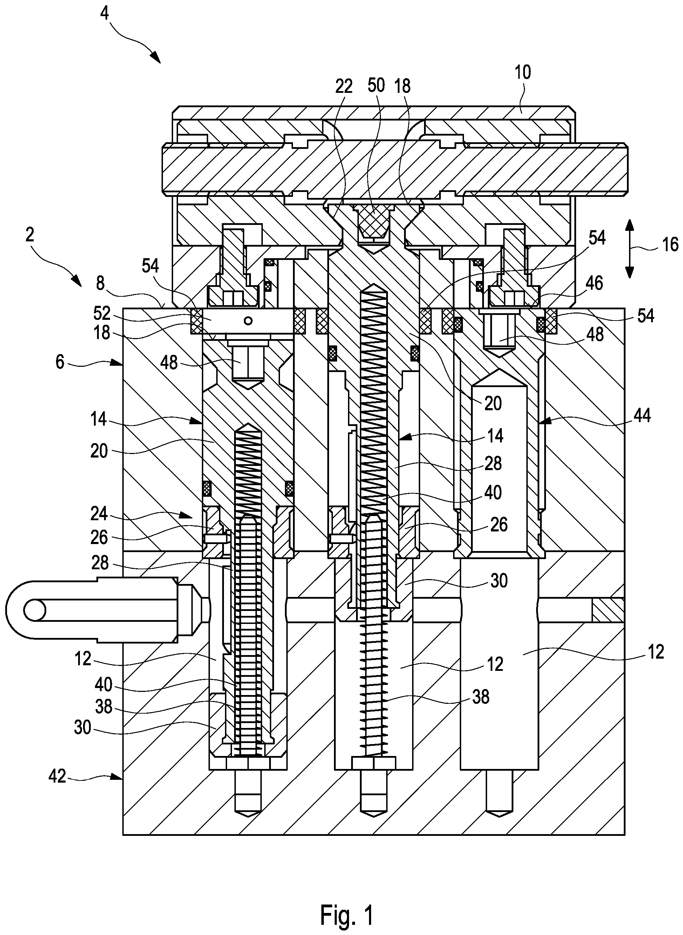

Darüber hinaus ist in den Figuren 1, 4, 8 und 9 ersichtlich, dass die Ablageeinrichtung 2 bei dem in den Figuren gezeigten Ausführungsbeispiel ein mechanisch wirksames Spannmittel 38 umfasst, das durch eine Feder gebildet ist. Durch das Spannmittel 38 ist der Haltebolzen 14 in die Haltestellung (Darstellung in Figur, 1 mittlerer Haltebolzen 14, sowie Figur 7 und Figur 9) gespannt. Das Spannmittel 38 ist hierbei innerhalb des Haltebolzens 14 in einer Öffnung 40 des Haltebolzens 14 angeordnet. Die Öffnung 40 befindet sich auf einer der Ablagefläche 8 entgegengesetzten Seite des Haltebolzens 14.

Um das Spannmittel 38 abzustützen, umfasst das Ablagemittel 6 eine eine geschlossene Oberfläche umfassende Bodenplatte 42, die lösbar am Ablagemittel 6 festlegbar ist. Hierdurch ist es ermöglicht, die Aussparungen 12 durchgehend auszubilden und Haltebolzen 14, Ringkörper 26, Fußabschnitt 30 sowie Spannmittel 38 in der Aussparung 12 anzuordnen und hiernach durch die Bodenplatte 42 zu verschließen.

Nicht in jeder Aussparung 12 des Ablagemittels 6 ist notwendigerweise ein Haltebolzen 14 anzuordnen. Eine Aussparung 12 kann auch durch ein stopfenartiges Verschlusselement 44 verschlossen sein. Im in der Aussparung 12 angeordneten Zustand des Verschlusselements 44 setzt dieses mit einer Verschlussfläche 46 die Ablagefläche 8 des Ablagemittels 6 stufenlos fort oder springt bezüglich der Ablagefläche 8 in Richtung Aussparung 12 zurück.

Den Figuren 1,8 und 8 ist entnehmbar, dass in der Verschlussfläche 46 des Verschlusselements 44 und/oder in der Stirnfläche 18 des Kopfabschnitts 20 des Haltebolzens 14 eine Ausnehmung 48 angeordnet sein kann, die bezüglich der Überführungsrichtung 16 einen eckigen Querschnitt umfassen kann. Hierdurch kann ein Werkzeug zum manuellen oder automatischen Betätigen auf einfache Weise in die Ausnehmung 48 eingeführt werden und das Verschlusselement 44 und/oder der Haltebolzen 14 betätigt werden. An der Ausnehmung 48 kann ein Stopfenelement 50 vorgesehen sein (Figur 8 und Figur 9), durch das die Ausnehmung 48 verschließbar ist. Darüber hinaus kann in der Ausnehmung 48 auch ein Deckelelement 52 angeordnet werden, das die Ausnehmung und die Stirnfläche 18 des Haltebolzens 14 und/oder die Ausnehmung 48 und die Verschlussfläche 46 des Verschlusselements 44 überdeckt und die Ablagefläche 8 im Wesentlichen stufenlos fortsetzt.

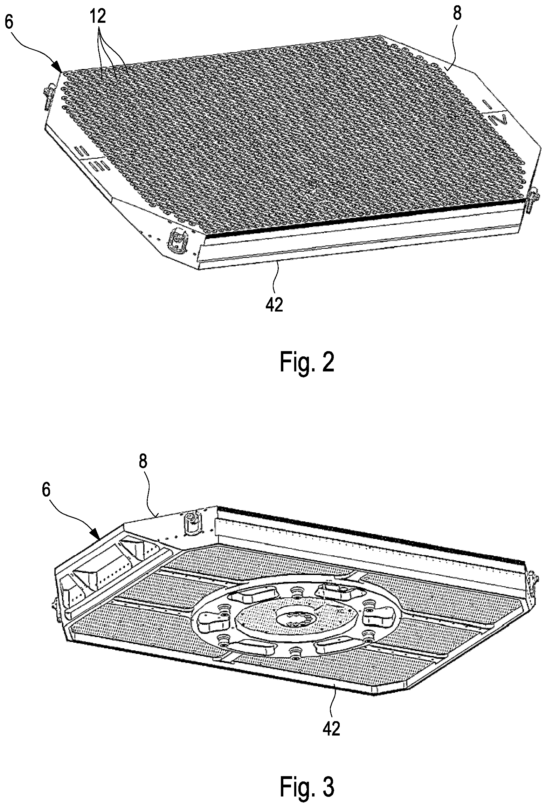

Figur 2 zeigt eine Darstellung des Ablagemittels 6. Aus Figur 2 ist ersichtlich, dass die Mehrzahl von Aussparungen 12 gleichmäßig zueinander über der Ablagefläche 8 verteilt sind.

Die Figuren 8 und 9 zeigen eine Detailansicht der Ablageeinrichtung 2 im Bereich des Übergangs der Aussparung 12 in die Ablagefläche 8. Aus den Figuren 8 und 9 ist es ersichtlich, dass in der Aussparung 12 jeweils ein Dichtmittel 54 angeordnet sein kann. Um einem Eindringen von Feuchtigkeit oder Verschmutzungen entgegenzuwirken, kann zudem eine Überdruckeinheit 56 vorgesehen sein, die mit einer Fluidführung in der mindestens einen Aussparung 12 mündet und durch die ein der Aussparung 12 über die Fluidführung zuführbares Fluid mit einem Überdruck beaufschlagbar ist.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Ablageeinrichtung
- 4: Befestigungsvorrichtung
- 6: Ablagemittel
- 8: Ablagefläche
- 10: Befestigungseinheit
- 12: Aussparung
- 14: Haltebolzen
- 16: Überführungsrichtung
- 18: Stirnfläche
- 20: Kopfabschnitt
- 22: Koppelbereich
- 24: Anschlageinheit
- 26: Ringkörper
- 28: Gleitabschnitt
- 30: Fußabschnitt
- 32: Kulissenführung
- 34: Kulisse
- 36: Vorsprung
- 38: Spannmittel
- 40: Öffnung
- 42: Bodenplatte
- 44: Verschlusselement
- 46: Verschlussfläche
- 48: Ausnehmung
- 50: Stopfenelement
- 52: Deckelelement
- 54: Dichtmittel
- 56: Überdruckeinheit

## Patentansprüche

1. Ablageeinrichtung (2) für eine Befestigungsvorrichtung (4) zum Festlegen eines Ablagekörpers, mit mindestens einem tisch- oder plattenartigen Ablagemittel (6), das eine Ablagefläche (8) umfasst, an der ein Ablagekörper und/oder eine den Ablagekörper an dem Ablagemittel (6) lösbar festlegende Befestigungseinheit (10) berührend anordenbar ist, und das eine Mehrzahl von Aussparungen (12) umfasst, die quer zur Ablagefläche (8) erstreckt sind und die von der Ablagefläche (8) aus zugänglich sind, und mit mindestens einem Haltebolzen (14), wobei jeweils einer des mindestens einen Haltebolzens (14) in einer der mindestens einen Aussparung (12) entlang einer quer zur Ablagefläche (8) verlaufenden Überführungsrichtung (16) bewegbar angeordnet ist, der in einer Grundstellung festlegbar ist, in welcher der Haltebolzen (14) die Ablagefläche (8) des Ablagemittels (6) mit einer von außen zugänglichen Stirnfläche (18) eines Kopfabschnitts (20) des Haltebolzen (14) stufenlos fortsetzt oder bezüglich der Ablagefläche (8) in Richtung Aussparung (12) zurückspringt, und der in eine Haltestellung überführbar und festlegbar ist, in welcher der Kopfabschnitt (20) des Haltebolzen (14) bezüglich der Ablagefläche (8) vorspringend aus der Aussparung (12) hervorragt und in der ein Koppelbereich (22) des Kopfabschnitts (20) zum daran Festlegen einer der mindestens einen Befestigungseinheit (10) von außen zugänglich ist.

2. Ablageeinrichtung (2) nach Anspruch 1, **dadurch gekennzeichnet, dass** die Mehrzahl von Aussparungen (12) im Ablagemittel (6) quer zur Überführungsrichtung (16) gleichmäßig zueinander beanstandet sind und gitternetzartig verteilt sind.

3. Ablageeinrichtung (2) nach Anspruch 1 oder 2, **gekennzeichnet durch** mindestens eine Anschlageinheit (24), die gemeinsam mit einem Haltebolzen (14) in einer der Aussparungen (12) angeordnet ist und durch die zumindest ein Bewegen des Haltebolzens (14) entlang der Überführungsrichtung (16) in und entgegen der Überführungsrichtung (16) begrenzbar ist.

4. Ablageeinrichtung (2) nach Anspruch 3, **dadurch gekennzeichnet, dass** die Anschlageinheit (24) einen in der Aussparung (12) angeordneten Ringkörper (26) umfasst und/oder dass ein Bewegen des Haltebolzens (14) aus Richtung Ablagefläche (8) in die Aussparung (12) durch Anschlag des Kopfabschnitts (20) am Ringkörper (26) auf der der Ablagefläche (8) zugewandten Seite des Ringkörpers (26) begrenzt ist, dass der Haltebolzen (14) einen an den Kopfabschnitt (20) angrenzenden Gleitabschnitt (28) umfasst, der eine bezüglich des Kopfabschnitts (20) zurückspringende Außenfläche des Haltebolzens (14) aufweist und dessen Durchmesser quer zur Überführungsrichtung (16) zum Innendurchmesser des Ringkörpers (26) korrespondierend, insbesondere komplementär, ausgebildet ist, und dass der Haltebolzen (14) einen Fußabschnitt (30) umfasst, der an dem dem Kopfabschnitt (20) abgewandten Ende des Gleitabschnitts (28) lösbar festlegbar oder festgelegt ist, dessen Durchmesser quer zur Überführungsrichtung (16) größer ist als der Innendurchmesser des Ringkörpers (26) und der in der Haltestellung auf der dem Kopfabschnitt (20) abgewandten Seite des Ringkörpers (26) am Ringkörper (26) anliegt.

5. Ablageeinrichtung (2) nach einem der vorhergehenden Ansprüche, **gekennzeichnet durch** mindestens eine Kulissenführung (32), die eine durch mindestens eine Nut gebildete Kulisse (34) am Haltebolzen (14), insbesondere am Gleitabschnitt (28) des Haltebolzens (14), umfasst und die mindestens einen pinartigen Vorsprung (36) umfasst, der ortsfest in der Aussparung (12) festgelegt ist und der in die Kulisse (34) eingreift, insbesondere wobei der pinartige Vorsprung (36) am Ringköper, insbesondere auf der dem Gleitabschnitt (28) des Haltebolzens (14) zugewandten Seite, ortsfest festgelegt ist.

6. Ablageeinrichtung (2) nach Anspruch 5, **dadurch gekennzeichnet, dass** die Kulissenführung Element der Anschlageinheit (24) ist, wobei der pinartige Vorsprung (36) in der Grundstellung an einem Grundstellungsanschlag der Kulisse (34) angeordnet und der Haltebolzen (14) gegen ein Bewegen in Richtung aus der Aussparung (12) gehalten ist, wobei der Haltebolzen (14) zum Lösen des pinartigen Vorsprungs (36) aus dem Grundstellungsanschlag in Richtung in die Aussparung (12) bewegbar und in einen Lösebereich der Kulisse (34) führbar ist, wobei der Haltebolzen (14) zum Anordnen des pinartigen Vorsprungs (36) in einem Haltestellungsbereich der Kulisse (34) in Richtung aus der Aussparung (12) bewegbar ist und wobei der Haltebolzen (14) zum Anordnen des pinartigen Vorsprung (36) am Grundstellungsanschlag in Richtung in die Aussparung (12) bis Erreichen eine Grundstellungsvoranschlags bewegbar und vom Grundstellungsvoranschlag durch Bewegen in Richtung aus der Aussparung (12) bis Erreichen des Grundstellunganschlags bewegbar ist.

7. Ablageeinrichtung (2) nach einem der vorhergehenden Ansprüche, **dadurch gekennzeichnet, dass** zumindest eine der Mehrzahl von Aussparungen (12) durch den Plattenkörper durchgehend ausgebildet ist und/oder dass der Haltebolzen (14) einen parallel zur Überführungsrichtung (16) erstreckten Hohlraum umfasst, der über eine Öffnung (40) am dem Kopfabschnitt (20) gegenüberliegenden Ende des Haltebolzens (14) von außen zugänglich ist.

8. Ablageeinrichtung (2) nach Anspruch 7, **gekennzeichnet durch** eine eine im wesentlichen geschlossene Oberfläche umfassende Bodenplatte (42), die quer zur Überführungsrichtung (16) eine geschlossenen Fläche umfasst, die am tisch- oder plattenartigen Ablagemittel (6) auf der der Ablagefläche (8) gegenüberliegende Seite des Ablagemittels (6) lösbar oder unlösbar festlegbar oder festgelegt ist und durch die die zumindest eine der Mehrzahl von Aussparungen (12) auf der der Anlagefläche abgewandten Seite des Plattenkörpers in Gänze oder zumindest abschnittsweise nach außen in verschlossen sind.

9. Ablageeinrichtung (2) nach einem der vorhergehenden Ansprüche, **gekennzeichnet durch** mindestens ein mechanisch, elektrisch, elektromagnetisch, pneumatisch und/oder hydraulisch wirksames Spannmittel (38), das in einer Aussparung (12) gemeinsam mit einem Haltebolzen (14) anordenbar ist und durch das der Haltebolzen (14) in die Haltestellung spannbar ist.

10. Ablageeinrichtung (2) nach Anspruch 9, **dadurch gekennzeichnet, dass** das Spannmittel (38) eine Feder umfasst, die mit einem Ende an der Bodenplatte (42) und mit dem anderen Ende am Haltebolzen (14) abgestützt ist, insbesondere mit dem am Haltebolzen (14) abgestützten Ende in der Öffnung (40) des Haltebolzens (14) angeordnet ist.

11. Ablageeinrichtung (2) nach einem der vorhergehenden Ansprüche, **dadurch gekennzeichnet, dass** der Koppelbereich (22) das Kopfabschnitts (20) des Haltebolzens (14) mindestens einen, insbesondere rotationsymmetrischen, Hintergriffbereich umfasst, der durch einen Rücksprung quer zur Überführungsrichtung (16) in der der parallel oder schräg zur Überführungsrichtung (16) verlaufenden Außenfläche des Kopfbereichs gebildet ist.

12. Ablageeinrichtung (2) nach einem der vorhergehenden Ansprüche, **gekennzeichnet durch** mindestens ein stopfenartiges Verschlusselement (44), das in der Aussparung (12) anordenbar ist, das im angeordneten Zustand die Aussparung (12) aus Richtung Ablagefläche (8) nach Außen verschließt und das im angeordneten Zustand die Ablagefläche (8) des Ablagemittels (6) mit einer von außen zugänglichen Verschlussfläche (46) stufenlos fortsetzt oder bezüglich der Ablagefläche (8) in Richtung Aussparung (12) zurückspringt.

13. Ablageeinrichtung (2) nach einem der vorhergehenden Ansprüche, **dadurch gekennzeichnet, dass** das Verschlusselement (44) an der Verschlussfläche (46) und/oder dass der Kopfabschnitt (20) des Haltbolzens in der Stirnfläche (18) eine Ausnehmung (48) umfasst, die einen bezüglich der Überführungsrichtung (16) verrundeten oder eckigen Querschnitt umfasst und in die ein Werkzeug zum manuellen oder automatischen Betätigen einführbar ist.

14. Ablageeinrichtung (2) nach einem der Ansprüche 13 oder 14, **gekennzeichnet durch** mindestes ein Stopfenelement (50), das in der Ausnehmung (48) in der Stirnfläche (18) des Kopfabschnitt (20) des Haltebolzens (14) und/oder in der Ausnehmung (48) in der Verschlussfläche (46) des Verschlusselements (44) anordenbar ist und das die Stirnfläche (18) bzw. die Verschlussfläche (46) mit einem Endabschnitt stufenlos fortsetzt oder bezüglich der Stirnfläche (18) bzw. der Verschlussfläche (46) in Richtung Ausnehmung (48) zurückspringt und/oder durch mindestes ein Deckelelement (52), das in der Ausnehmung (48) in der Stirnfläche (18) des Kopfabschnitt (20) des Haltebolzens (14) und/oder in der Ausnehmung (48) in der Verschlussfläche (46) des Verschlusselements (44) anordenbar ist und das mit einem Bodenabschnitt an der Stirnfläche (18) bzw. an der Verschlussfläche (46), die Stirnfläche (18) bzw. die Verschlussfläche (46) insbesondere in Gänze oder zumindest abschnittsweise quer zur Überführungsrichtung (16) überdeckend, anliegt.

15. Ablageeinrichtung (2) nach einem der vorhergehenden Ansprüche, **gekennzeichnet durch** mindestens ein Dichtmittel (54), das in der Aussparung (12), insbesondere an einem an die Ablagefläche (8) angrenzenden Bereich, das am Kopfabschnitt (20) des Haltebolzens (14) und/oder das am Verschlusselement (44) angeordnet ist, und durch das ein Spalt zwischen Haltebolzen (14) und Aussparung (12) bzw. zwischen Verschlusselement (44) und Aussparung (12) verschließbar ist und/oder durch mindestens eine Überdruckeinheit (56), die mit einer Fluidführung in der mindestens einen Aussparung (12) mündet, und durch die ein der Aussparung (12) über die Fluidführung zuführbares Fluid mit einem Überdruck beaufschlagbar ist.
